# NEUE EUROPÄISCHE PATENTSCHRIFT

(11) **EP 1 371 313 B2**
(45) Veröffentlichungstag und Bekanntmachung des Hinweises auf die Entscheidung über den Einspruch: **11.03.2009**
(45) Hinweis auf die Patenterteilung: 06.07.2005
(21) Anmeldenummer: 03008623.5
(22) Anmeldetag: 15.04.2003
(51) Int. Cl.: A47J 37/12

(54) **Frittier- und Kocheinheit**
Frying and cooking unit
Unité de friture et de cuisson

(30) Priorität: 14.06.2002 DE 10226763; 11.02.2003 DE 10305440
(43) Veröffentlichungstag der Anmeldung: 17.12.2003
(73) Patentinhaber: Electrolux Professional GmbH, 22547 Hamburg (DE)
(72) Erfinder: Baumann, Udo, 22459 Hamburg (DE)
(74) Vertreter: Meissner, Bolte & Partner

(56) Entgegenhaltungen:
- FR-A- 2 622 783
- FR-A- 2 650 165

## Beschreibung

Die Erfindung betrifft eine Frittier- und Koch- Dämpfeinheit gemäss Patentanspruch 1.

In einer Küche, insbesondere in einer gewerblichen Großküche, wird auf vier verschiedene Arten gegart, nämlich Kochen mit 100° Celsius heißem Wasser, Kochen mit 95° Celsius heißem Wasser (Simmern), Dampfgaren mit 100° Celsius bei niedrigem Druck (0 Bar), sowie Frittieren in Öl bei 180° Celsius. Üblicherweise werden diese Garmethoden in Töpfen und Pfannen ausgeführt, so dass eine Menge Platz zum Aufbewahren dieser Kochgegenstände benötigt wird und große Herde und Öfen bereitgestellt werden müssen. Modernere Küchen sind dagegen mit verschiedenen Geräten ausgestattet, nämlich einem Kochofen bzw. einem Teigwarenkocher, einem drucklosen Dampfgargerät und einer Friteuse. Auch in solchen Küchen wird sehr viel Platz für das Aufstellen dieser Gerätschaften und hohe Investitionskosten benötigt.

Aus der FR-A-2622783 ist eine vielseitige Kocheinrichtung bekannt, bei der eine von einer Wärmekammer getrennte Garkammer mit unteren und oberen Düsen versehen ist, durch die hindurch Öl, Wasser oder Dampf geführt wird, um Sprüh- oder Tauchgaren des Gargutes zu ermöglichen, das mittels zahnstangengetriebener Schubladen zwischen die oberen und unteren Düsen bringbar ist.

Es ist Aufgabe der Erfindung, eine Gareinheit anzugeben, die in einer Küche wenig Platz benötigt und durch die Investitionskosten besonders niedrig haltbar sind.

Die Lösung dieser Aufgabe erfolgt erfindungsgemäss durch die Merkmale des Anspruches 1.

Dadurch, dass die Gareinheit Mittel umfasst, durch die wahlweise Garvorgänge mit Wasser, Dampf oder Öl ausführbar sind, ist eine Gareinheit geschaffen, die platzsparend und kostengünstig ausgestaltet ist. Die Gareinheit kann auch Mittel aufweisen, durch die Garvorgänge wahlweise mit Wasser oder Öl bzw. wahlweise mit Dampf oder Öl ausführbar sind.

Erfindungsgemäss sind Rohre, zum Tragen eines (ersten) Garbehälters umfasst, der als ein in einem zweiten Garbehälter aufnehmbarer Korb, insbesondere Frittier- oder Kochkorb, ausgebildet ist. Wenigstens eines dieser Rohre dient zur Zufuhr von Wasser, Dampf und/oder Öl.

Die Zufuhr erfolgt die vorzugsweise in den zweiten Garbehälter. Dem wenigstens einen Rohr ist insbesondere eine Verstärker-Dampferzeugungseinheit zum Bereitstellen von erhitzter bzw. verdampfter Flüssigkeit vorgeschaltet, die insbesondere unmittelbar für einen Garvorgang, insbesondere Frittier- und/oder Kochvorgang, geeignet ist. Dem ersten und/oder zweiten Garbehälter kann eine Heizeinrichtung zugeordnet sein, die vorzugsweise dem Fortgaren dient. Weiterhin können Sensoren für Salz, Stärke und/oder Flüssigkeitstrübung vorgesehen sein, so dass ein überwachter Garvorgang ermöglicht ist.

Es ist vorteilhaft, eine Schalt- und Regeleinheit zum Einstellen und Steuern der Gareinheit vorzusehen, wobei diese Schalt- und Regeleinheit vorzugsweise sechs Bedienelemente umfasst. Diese sechs Bedienelemente sind folgenden Prozessen zugeordnet: Ein/Aus, Kochen 100° Celsius, Kochen 95° Celsius, Dampfgaren 100° Celsius, Frittieren 180° Celsius und Reinigen.

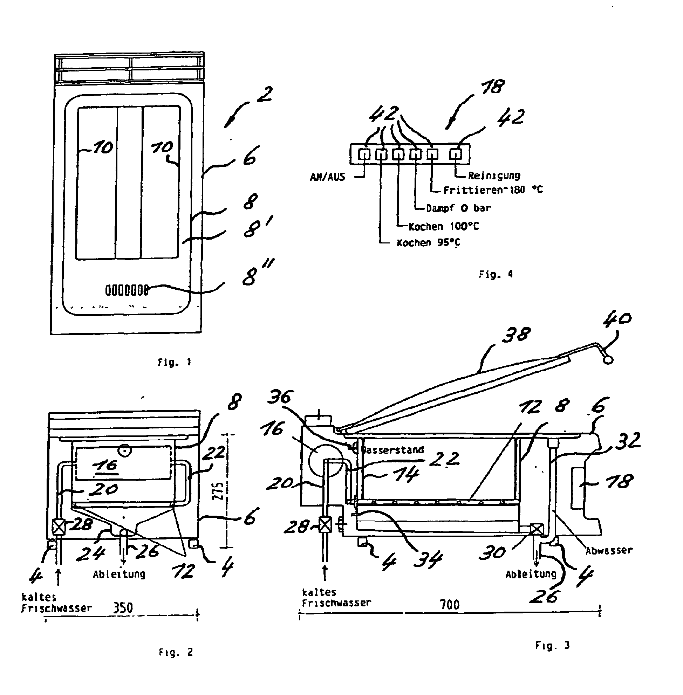

Die Erfindung ist anhand beigefügter Zeichnungen näher erläutert. Diese Zeichnungen zeigen eine Frittier- und Kocheinheit in verschiedenen Ansichten, nämlich
gemäss Figur 1 in der Draufsicht,
gemäss Figur 2 in der Seitenansicht und
gemäss Figur 3 in der Vorderansicht.
Figur 4 ist eine Darstellung einer in der Frittier- und Kocheinheit umfassten Schaltenheit.

Die Frittier- und Gareinheit 2 weist ein auf Füßen oder Trägern 4 oder dgl. ruhendes Gehäuse 6 auf, in dem ein Behälter 8 ausgebildet oder aufgenommen ist.

An den gegenüberliegenden inneren Längsseiten 10 des Behälters 8 erstrecken sich in einer gemeinsamen horizontalen Ebene, die am unteren Ende des vertikalen Bereichs verläuft, zwei odern mehrere Rohre 12, die als Wasserzuführung (Wasserabfüllung) und Dampfinjektor ausgebildet sind und einen als Garkorb, insbesondere Frittierkorb, ausgebildeten Garbehälter 14 tragen können.

Hinter seiner Rückseite erstreckt sich etwas über der halben Höhe horizontal eine Verstärker-/Dampferzeugungseinheit (Verstärker/Dämpfer - Booster/Steamer) 16, vor seiner Vorderseite etwa in halber Höhe eine elektrische Schalttafel (Bedieneinheit) 18.

Der Verstärker-/Dampferzeugungseinheit 16 ist eingangsseitig ein seitlich ansetzender und dann vertikal nach unten verlaufender Zufluss 20 für kaltes Frischwasser und Öl und ausgangsseitig ein gegenüberliegend seitlich ansetzender Verteiler 22 zugeordnet, der bis zur Ebene der Rohre 12 vertikal nach unten verläuft und diese horizontal verbindet.

Der Behälter 8 ist in der Draufsicht und in der Seitenansicht zumindest im wesentlichen rechteckig ausgebildet, wobei er an seiner Oberseite einen umlaufenden Überlaufrand 8' aufweist und an seinem Boden von der Rückseite her in Richtung Vorderseite leicht nach unten geneigt ist. In der Vorderansicht verjüngt sich die zunächst rechteckige Ausbildung im unteren Bereich zu einer mittig angeordneten Abflussrinne 24, der ein vertikal verlaufender Abfluss 26 zugeordnet ist.

In den Zufluss 20 ist ein Magnetventil 28, in den Abfluss 26 ein Magnetventil 30 geschaltet. Schalttafelseitig setzt an einem im Ablaufrand 8' aufgenommenen Gitter 8'' ein (Abwasser führender) Überlauf 32 an, der unter Umgehung des Magnetventils 30 mit dem Abfluss 26 verbunden ist.

In der Rückseite des Behälters 8 ist in ihrem unteren Bereich ein Salz- und/oder ein Stärke- und/oder ein Trübungssensor 34 für den Salz- und/oder Stärkegehalt und/oder die Trübung der das Gargut aufnehmenden Flüssigkeit und in ihrem oberen Bereich ein Sensor 36 für den Flüssigkeitsstand angeordnet.
Der Behälter 8 ist durch einen zumindest bereichsweise durchsichtigen Deckel 38 mit Glas verschließbar, der an der Oberseite des Gehäuses 6 rückseitig angelenkt ist und vorderseitig einen Griff 40 aufweist. Der Deckel 38 besteht insbesondere vollständig aus Glas oder ist mit einem Glaseinsatz versehen.

Die elektrische Schalttafel 18 weist nebeneinander Bedienelemente 42 zum Ein- und Ausschalten, Kochen mit 95 °C, Kochen mit 100°C, Dampf 0 bar, Frittieren mit 180 °C und Reinigen auf.

Die Bedienelemente 42 wirken ebenso wie die Sensoren 34, 36 mit einer nichtdargestellten Regeleinheit zusammen

Mit der gemäss Figuren 1 bis 4 dargestellten Frittier- und Kocheinheit sind folgende Garprozesse durchführbar:

### 1. Kochen 100° Celsius

Nach dem Betätigen der Schalttaste 42 "Kochen" öffnet das magnetisch gesteuerte Wasserzulaufventil 28 automatisch. Es fliesst Wasser über die Verstärker-/Dampferzeugungseinheit 16 in den (direkt nutzbaren oder den korbförmigen Garbehälter 14 aufnehmenden beckenförmigen) Garbehälter 8, wobei es auf 100° Celsius aufgeheizt wird. Der Eintritt der erhitzten bzw. verdampften Flüssigkeit erfolgt über die zwei Rohre 12, die auch den korbförmigen Garbehälter 14 tragen. Eine Zufuhr von ca. 7 Liter Flüssigkeit ist regelmässig vorgegeben. Das derart erhitzte Wasser ist unmittelbar für einen Kochvorgang geeignet. Um die Temperatur während des Kochvorganges aufrecht zu erhalten ist ein nichtdargestelltes Heizelement ausserhalb des Garbehälters 8 vorgesehen, welches Wärmeenergie an den Garbehälter 8 und/oder an die darin enthaltene Flüssigkeit abgibt.

Während des Kochvorganges von Teigwaren kontrollieren der Salz- und ein Stärkesensor 34 die Wasserbedingungen. Sobald die Konzentration des Salzes oder der Stärke übermässig ansteigt, wird frisches Wasser zugeführt, bis die richtigen Bedingungen wieder erreicht sind. Verbrauchtes Wasser fliesst über das Gitter 8'' auf der Garbehälteroberseite und das Entleerungsrohr 32 ab.

### 2. Kochen 95° Celsius (Simmern, insbesondere für Fisch, Krebs und empfindliche Gemüsearten)

Dieses Garprogramm entspricht dem vorstehenden, aber eine nicht dargestellte Temperaturkontrolleinheit, welche insbesondere elektronisch arbeitet, regelt eine Maximaltemperatur von 95° Celsius.

### 3. Frittieren

Nach dem Betätigen des Bedienelementes 42 "Frittieren" öffnet sich das Entleerungsventil 30 und eventuell im Garbehälter 8 befindliches Wasser aus einem vorangegangenen Garprozess fliesst ab. Es folgt eine Heizperiode von ca. 2 Minuten, um den Garbehälter 8 zu trocknen, so dass sichergestellt ist, dass das gesamte Wasser sich verflüchtigt hat. Anschliessend wird Speiseöl aus einem nichtdargestellten Aufbewahrungsbehälter durch die Verstärker-/Dampferzeugungseinheit 16 gepumpt und dabei sehr schnell auf 180° Celsius aufgeheizt. Auf diese Weise kann unmittelbar mit dem Frittierprozess begonnen werden, wobei die bereits erwähnten Heizelemente gewährleisten, dass die erforderliche Temperatur von 180° Celsius aufrecht erhalten bleibt.

### 4. Druckloses Dampfgaren

Nach dem Betätigen des Schaltelementes 42 "Dampf" öffnet sich das Entleerungsventil 30 und Wasser von einem vorhergehenden Kochprozess kann abfliessen. Falls vorhergehend ein Frittierprozess durchgeführt wurde, fliesst das Speiseöl in einen nichtdargestellten Aufbewahrungscontainer, um es eventuell für einen weiteren Frittierprozess zwischenzuspeichern oder einer Entsorgung zuzuführen. Falls erforderlich, wird der Garbehälter 8 mit frischem heissem Wasser oder Dampf durch Drücken der Schalttaste 42 "Reinigen" gesäubert. Zum Starten des Dampfgarprozesses muss der umfasste Deckel 38 geschlossen werden. Falls dieser während der Dampfzufuhr geöffnet wird, stoppt diese Zufuhr automatisch. Vorzugsweise ist der durchsichtige Deckel 38 mit einer nicht beschlagenden Oberfläche ausgestattet, um den Dampfprozess überwachen zu können. In der Verstärker-/Dampferzeugungseinheit wird nun permanent Dampf erzeugt, der durch die Rohre 12 in die Garkammer tritt und die auf den Rohren 12 positionierten Garbehälter durchströmt.

## Patentansprüche

1. Gareinheit, insbesondere für gewerbliche Großküchen, mit Mitteln, durch die Garvorgänge wahlweise mit Wasser, Dampf oder Öl ausführbar sind, **dadurch gekennzeichnet, dass** Rohre (12) zum Tragen eines ersten Garbehälters (14) umfasst sind, der als ein in einem zweiten Garbehälter (8) aufnehmbarer Korb, beispielsweise Frittier- oder Kochkorb, ausgebildet ist, wobei wenigstens eines dieser Rohre (12) zur Zufuhr von Wasser, Dampf oder Öl umfasst ist.

2. Gareinheit nach Anspruch 1 wobei die Garvorgänge wahlweise mit Wasser oder Öl ausführbar sind.

3. Gareinheit nach Anspruch 1 wobei die Garvorgänge wahlweise mit Dampf oder Öl ausführbar sind.

4. Gareinheit nach einem der Ansprüche 1 bis 3, **dadurch gekennzeichnet, dass** die Zufuhr von Wasser, Dampf oder Öl in den zweiten Garbehälter (8) erfolgt.

5. Gareinheit nach einem der Ansprüche 1 bis 4, **dadurch gekennzeichnet, dass** dem wenigstens einen Rohr (12) eine Verstärker-Dampferzeugungseinheit (16) zum Bereitstellen von erhitzter oder verdampfter Flüssigkeit vorgeschaltet ist, die insbesondere unmittelbar für einen Kochvorgang geeignet ist.

6. Gareinheit nach einem der Ansprüche 1 bis 5, **dadurch gekennzeichnet, dass** dem ersten und/oder zweiten Garbehälter (14, 8) eine Heizeinrichtung zugeordnet ist, die insbesondere dem Fortgaren dient.

7. Gareinheit nach einem der Ansprüche 1 bis 6, **dadurch gekennzeichnet, dass** wenigstens ein Sensor (34) für Salz, Stärke und/oder Flüssigkeitstrübung umfasst ist.

8. Gareinheit nach einem der Ansprüche 1 bis 7, **dadurch gekennzeichnet, dass** eine Schalt- und Regeleinheit umfasst ist, die für die Anwahl und/oder die Regelung unterschiedlicher Garprozesse vorgesehen ist.

## Claims

1. Cooking unit, in particular for large-scale commercial kitchens, having means whereby the cooking process can be carried out selectively with water, steam or oil, **characterised in that** it comprises tubes (12) for supporting a first cooking container (14), which is formed as a basket, e.g. a frying or cooking basket, capable of being received in a second cooking container (8), wherein at least one of these tubes (12) is comprised for the supply of water, steam or oil.

2. Cooking unit according to claim 1, wherein the cooking processes can be carried out selectively with water or oil.

3. Cooking unit according to claim 1, wherein the cooking processes can be carried out selectively with steam or oil.

4. Cooking unit according to one of claims 1 to 3, **characterised in that** the supply of water, steam or oil is carried out in the second cooking container (8).

5. Cooking unit according to one of claims 1 to 4, **characterised in that** an amplifier/steam-generating unit (16) is connected upstream of the at least one tube (12) in order to make available heated or evaporated liquid, which is in particular suitable immediately for a cooking process.

6. Cooking unit according to one of claims 1 to 5, **characterised in that** a heating device is allocated to the first and/or second cooking container (14, 8) and is used in particular for continuing the cooking process.

7. Cooking unit according to one of claims 1 to 6, **characterised in that** it comprises at least one sensor (34) for salt, strength and/or cloudiness of the liquid.

8. Cooking unit according to one of claims 1 to 7, **characterised in that** it comprises a switching and regulating unit, which is provided for the selection and/or regulation of different cooking processes.

## Revendications

1. Unité de cuisson, en particulier pour des grandes cuisines industrielles, avec des moyens, par lesquels des opérations de cuisson peuvent être exécutées sélectivement avec de l'eau, de la vapeur ou de l'huile, **caractérisée en ce que** des tubes (12) sont prévus pour le support d'un premier récipient de cuisson (14) qui est réalisé comme panier, par exemple panier de friture ou de cuisson, pouvant être reçu dans un deuxième récipient de cuisson (8), où au moins l'un de ces tubes (12) est réalisé pour l'amenée d'eau, de vapeur ou d'huile.

2. Unité de cuisson selon la revendication 1, où les opérations de cuisson peuvent être exécutées sélectivement avec de l'eau ou de l'huile.

3. Unité de cuisson selon la revendication 1, où les opérations de cuisson peuvent être exécutées sélectivement avec de la vapeur ou de l'huile.

4. Unité de cuisson selon l'une des revendications 1 à 3, **caractérisée en ce que** l'amenée d'eau, de vapeur ou d'huile a lieu dans le deuxième récipient de cuisson (8).

5. Unité de cuisson selon l'une des revendications 1 à 4, **caractérisée en ce qu'**il est monté en amont d'au moins un tube (12) une unité d'amplification - génération de vapeur (16) pour la mise à disposition d'un liquide chauffé ou évaporé, qui convient en particulier directement pour une opération de cuisson.

6. Unité de cuisson selon l'une des revendications 1 à 5, **caractérisée en ce qu'**il est associé au premier et/ou deuxième récipient de cuisson (14, 8) une installation de chauffage qui sert en particulier à la continuation de la cuisson.

7. Unité de cuisson selon l'une des revendications 1 à 6, **caractérisée en ce qu'**elle comporte au moins un capteur (34) pour le sel, le féculent et/ou le trouble du liquide.

8. Unité de cuisson selon l'une des revendications 1 à 7, **caractérisée en ce qu'**elle comprend une unité de commutation et de réglage qui est prévue pour la sélection et/ou le réglage de processus de cuisson différents.
